Europäisches Patentamt

European Patent Office

Office européen des brevets

(11) Publication number: **0 492 732 A1**

# EUROPEAN PATENT APPLICATION

(21) Application number: **91203373.5**

(22) Date of filing: **23.12.91**

(51) Int. Cl.5: **B65G 67/60**, B65G 21/10

(30) Priority: **28.12.90 NL 9002906**

(43) Date of publication of application:
**01.07.92 Bulletin 92/27**

(84) Designated Contracting States:
**BE DE FR IT NL**

(71) Applicant: **D.C.G. HOLDING AMSTERDAM B.V.**
**T.T. Melisseweg 29**
**NL-1033 SP Amsterdam(NL)**

(72) Inventor: **Ammeraal, Thomas Maria Cornelis**
**Zandweg 115**
**NL-1531 AM Wormer(NL)**

(74) Representative: **Metman, Karel Johannes et al**
**Octrooibureau Los en Stigter B.V. P.O.Box**
**20052**
**NL-1000 HB Amsterdam(NL)**

(54) Conveying apparatus.

(57) A conveying apparatus for loading and unloading ships comprises a helical belt conveyor for the transport along a helical path. Said helical belt conveyor has a substantially vertical central shaft and is provided with a plurality of endless conveyor belts, of which an upper run follows a helical path. The apparatus further comprises a lower discharge or feed conveyor being rotatable through at least 360° about said shaft, and an upper feed or discharge conveyor having an end conveyor movable relative to the main portion thereof and the free end of which continuously joining the helical belt conveyor. At least three conveyor belts of the belt conveyor are adjustable and connectable to each other such that, in a loading position of the conveying apparatus, a central conveyor belt connects with its lower end abutted to a lower conveyor belt and the central conveyor belt being slidable at its upper side below a conveyor belt lying thereabove upon rotation about the central shaft, and, in an unloading position of the conveying apparatus, the central conveyor belt connecting at its upper end to a conveyor belt lying thereabove, and there being slidable from below over the central conveyor belt a downwardly following conveyor belt upon rotation about the central shaft.

fig.2

The invention relates to a conveying apparatus, in particular for loading and unloading ships, comprising a helical belt conveyor for the transport along a helical path, said helical belt conveyor having a substantially vertical central shaft and being provided with a plurality of endless conveyor belts, of which an upper run follows a helical path, the apparatus further comprising a lower discharge or feed conveyor being rotatable through at least 360° about said shaft, and an upper feed or discharge conveyor having an end conveyor movable relative to the main portion thereof and the free end of which continuously joining the helical belt conveyor.

Such a conveying apparatus is known from EP-B-0 125 715. In this conveying apparatus the end conveyor of the upper feed or discharge conveyor adjustably joins the upper run of an upper conveyor belt. To obtain a proper transition between this conveyor belt and the end conveyor, both during loading and unloading of a ship, the frame of the end conveyor is provided with two horizontal guide means lying respectively under and above the upper run of the upper conveyor belt so as to provide this conveyor belt with a curve connecting to the end conveyor. This curve of the conveyor belt has the disadvantage, however, that large forces should be exerted thereon so that the upper conveyor belt wears more quickly than normal.

It is the object of the invention to remove this disadvantage and to provide a conveying apparatus wherein, nonetheless, both during loading and unloading a good transition between the various conveyors and/or conveyor belts is insured.

For this purpose the conveying apparatus according to the invention is characterized in that at least three conveyor belts of the belt conveyor are adjustable and connectable to each other such that, in a loading position of the conveying apparatus, a central conveyor belt connects with its lower end abutted to a lower conveyor belt and the central conveyor belt being slidable at its upper side below a conveyor belt lying thereabove upon rotation about the central shaft, and, in an unloading position of the conveying apparatus, the central conveyor belt connecting at its upper end to a conveyor belt lying thereabove, and there being slidable from below over the central conveyor belt a downwardly following conveyor belt upon rotation about the central shaft.

In this manner none of the conveyor belts should be deformed for obtaining a proper, adjustable transition and, by effecting a special loading and/or unloading position a "step" at the transition between the joining conveyor belts is avoided and consequently the proper transfer of the goods to be conveyed is ensured.

It is noted that from EP-A-0 075 645 there is known a conveying apparatus wherein a lower helical conveyor belt is adjustable such that in the loading position of the conveying apparatus, it is slidable below a conveyor belt lying above it, while in the unloading position of the conveying apparatus this lower conveyor belt is slidable above the conveyor belt lying upwards. The operation and structure of this conveying apparatus are consequently different from those of the the present invention.

A favourable embodiment of the conveying apparatus according to the invention is characterized in that in the loading position, the upper conveyor belt of the helical belt conveyor moves along with the central shaft, while the free end of the upper feed or discharge conveyor is slidable along the upper run of the upper conveyor belt when it is rotating about the central shaft, and in the unloading position, the upper conveyor belt abuts with its upper end to the upper feed or discharge conveyor.

Another advantageous possibility is that in which a set of conveyor belts is provided one on top of the other and being alternately slidable with respect to each other, wherein always the upper conveyor belt is seen in the respective direction of conveyance, connects to a preceding conveyor belt, while the conveyor belt lying under it always follows subsequently.

The invention will hereafter be elucidated with reference to the drawing showing a number of embodiments of the invention by way of example.

Fig. 1 and 2 are very schematic partial sectional views of a conveying apparatus for loading and unloading ships according to the invention, wherein two different rotational positions are shown with the conveying apparatus in the loading position.

Fig. 3 is a scheme of the principle of the co-operation of the adjustable conveyor belts of the conveying apparatus according to fig. 1 and 2.

Fig. 4 and 5 are sectional views corresponding to those of fig. 1 and 2, but wherein the conveying apparatus is in the unloading position.

Fig. 6 is a principle scheme corresponding to that of fig. 3, however in the unloading position according to fig. 4 and 5.

Fig. 7 and 8 are sectional views corresponding to those of fig. 1 and 2, showing a second embodiment of the conveying apparatus according to the invention with the conveying apparatus in the loading position.

Fig. 9 is a principle scheme corresponding to that of fig. 3 and illustrating the co-operation between the adjustable conveyor belts of the conveying apparatus according to fig. 7 and 8.

Fig. 10 and 11 are sectional views corresponding to those of fig. 7 and 8, but wherein the conveying apparatus is shown in the unloading position.

Fig. 12 is a principal scheme corresponding to that of fig. 9, but showing the unloading position of fig. 10 and 11.

In the various figures of the drawings like parts are designated with like reference numerals.

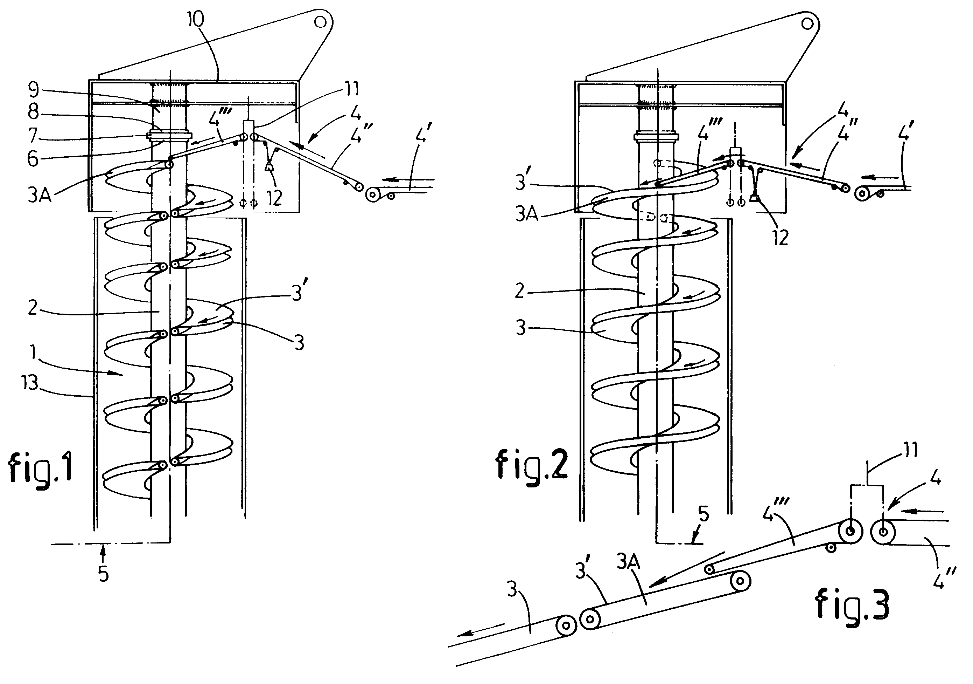

The drawing, and in particular fig. 1-6 thereof, shows a first embodiment of the conveying apparatus according to the invention by way of example, which is particularly intended for loading and unloading ships. The drawing schematically shows only that portion of the whole conveying apparatus which is important to the present invention. The other portion of the conveying apparatus may be constructed in the same manner as the conveying apparatus according to European patent specification 0 125 715, the contents of which are incorporated herein by reference thereto.

In the first place the conveying apparatus comprises a helical belt conveyor 1 for the transport in vertical height along a helical path, which belt conveyor 1 is pivotable about a horizontal axis and is suspended from a feed or discharge shaft, which is connected to a crane structure (not shown) pivotable about a horizontal axis.

The helical belt conveyor 1 has a substantially vertical central shaft 2 and is further provided with a plurality of interconnecting driven endless conveyor belts 3, of which the upper runs 3' follow helical paths which join each other and which end at the lower and upper sides along substantially horizontal generating lines.

The conveying apparatus further comprises a driven upper feed and discharge conveyor 4 and a driven lower discharge and feed conveyor 5, which is indicated only schematically by a dot and dash line. This lower discharge and feed conveyor 5 is connected to the helical belt conveyor 1 and is rotatable with it through at least 360° about the center line of the central shaft 2. In general the conveying apparatus will be of such a structure that the helical belt conveyor 1 and the lower discharge or feed conveyor 5 are rotatable together in both opposite directions. When a ship is loaded or unloaded, the lower discharge or feed conveyor 5 will be in the hold of the ship together with a lower portion of the belt conveyor 1.

In order to rotate, the central shaft 2 of the helical belt conveyor 1 is fixed at the upper side to the coaxial outer race 7 of a bearing construction, such as a ball bearing, by means of an upper flange 6 connected to the central shaft, said outer race 7 being provided with external teeth and forming a drive gear which may be driven by means of a drive member (not shown). The inner race of the bearing construction is connected to a lower flange 8 of a stationary support shaft 15, which is aligned with the central shaft 2 and which is welded to the upper portion 10 of the casing of the helical belt conveyor 1.

While the connection of the lower discharge and feed conveyor 5 to the lower end of the helical belt conveyor 1 does not pose any problem, as the helical belt conveyor 1 is rotated together with the lower discharge and feed conveyor 5, there must be special provisions in this embodiment to ensure a proper connection of the upper feed and discharge conveyor 4 to the helical belt conveyor 1. It is noted, however, that the special provisions may also be provided at the lower end of the helical belt conveyor 1 or even in a central portion thereof.

In the embodiment shown in the drawing by way of example, the driven main portion 4' of the upper feed and discharge conveyor 4 joins a driven end conveyor 4''' through a driven intermediate conveyor 4'', said driven end conveyor being adapted to carry out a substantially vertical translatory motion by means of an adjusting means 11, while its free end continuously joins the helical belt conveyor 1 in a manner to be described hereinafter. The intermediate conveyor 4'' is connected on one side to the main portion 4' of the upper feed and discharge conveyor 4 and may pivot about a substantially horizontal axis with respect thereto, while the intermediate conveyor 4'' is connected on its other side to the end conveyor 4''' and may pivot about a substantially horizontal axis with respect thereto. The intermediate conveyor 4'' has an adjustable length which is automatically adjusted by means of a tightening device 12 (shown in a simplified manner) when its position changes as a result of an adjustment of the end conveyor 4'''. The individual conveyors of the feed and discharge conveyor 4 are illustrated as conveyor belts in this embodiment by way of example, but they could also be constructed in a different manner, for example as roller conveyor.

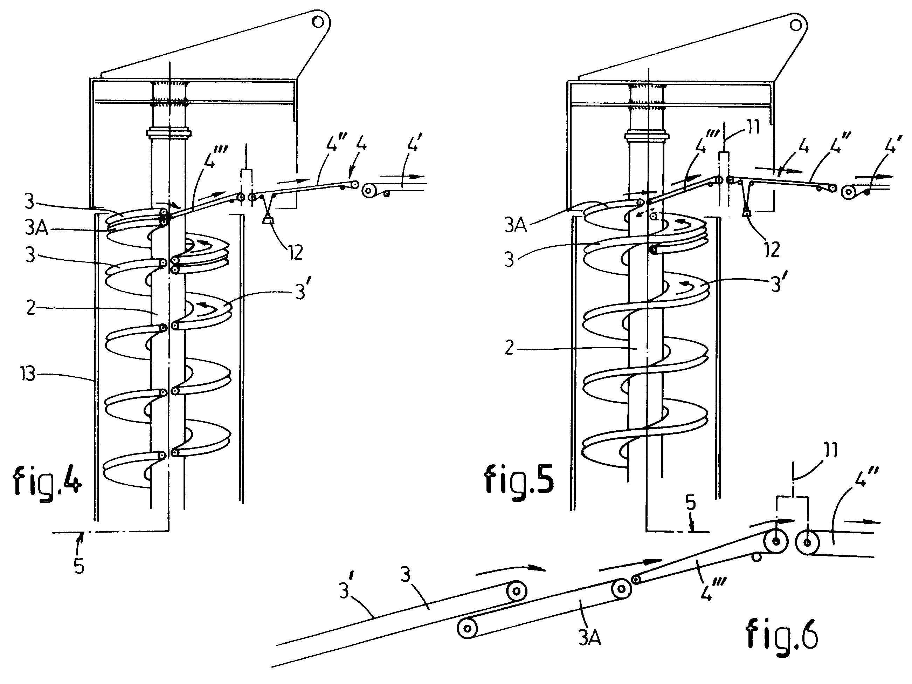

In the first embodiment of the invention by way of example as illustrated in fig. 1-6, the upper conveyor belt 3A is made adjustable in order to ensure a proper adjustable connection of the helical belt conveyor 1 to the upper feed and discharge conveyor 4 in all rotational positions of the belt conveyor 1, both during use of the conveying apparatus for loading a ship as shown in fig. 1-3, and during use of the conveying apparatus for unloading a ship as shown in fig. 4-6.

In fig. 1-3 the free end of the end conveyor 4''' is slidable over the upper run 3' of the upper conveyor belt 3A extending through at least 360°, such that when the helical belt conveyor 1 together with the central shaft 2 is rotated and all conveyor belts 3 and 3A move as a whole, the end conveyor 4''' of the upper feed and discharge conveyor 4 is displaced along the upper run 3' of the upper conveyor belt 3A and moves along in vertical direction in synchronic fashion by means of the adjusting member 11, so that its angular position remains constant, as is illustrated by a comparison of fig. 1 and 2 where the lower discharge and feed conveyor 5 is rotated 180°. The intermediate conveyor 4'' adapts itself regarding angular position and length in order to guarantee a permanent connection between the main portion 4' and the end conveyor 4''' of the upper feed and discharge conveyor 4. It is possible to provide a transfer roller at the free end of the end conveyor 4''' to effect a smooth transfer of the conveyed goods from the end conveyor 4''' to the upper conveyor belt 3A.

For conveying goods downwardly within the helical belt conveyor 1, which is the case when a ship is unloaded (fig. 4-6), the upper conveyor belt 3A of the helical belt conveyor 1 is disposed on a lower level along the central shaft 2 onto a helical guide thereof (not shown). In this manner it is possible to slide the subsequent conveyor belt 3 over the upper conveyor belt 3A when the lower discharge and feed conveyor 5 and consequently the central shaft 2 is rotated. Then the upper end of the upper conveyor belt 3A remains abutted to the lower free end of the end conveyor 4''' of the upper feed and discharge conveyor 4. When the central shaft is rotated, the upper conveyor belt 3A is adjusted vertically by the helical guide around this central shaft 2, when the end conveyor 4''' follows this vertical movement through the adjusting member 11, so that a good connection both between the conveyor belt 3 and the conveyor belt 3A and between the conveyor belt 3A and the conveyor 4''' of the upper feed and discharge conveyor 4 is maintained, while the lower discharge and feed conveyor remains on the same height. The rotation of the central shaft 2 is in this case absorbed between the upper conveyor belt 3A and the conveyor belt 3 lying under it, contrary to the loading situation of fig. 1-3, where the rotation of the central shaft 2 is absorbed between the upper conveyor belt 3A and the end conveyor 4''' of the upper feed and discharge conveyor 4. In both cases the conveyed goods do not encounter a "step" and, as seen in the direction of conveyance, only a downward transfer between joining conveyor belts takes place thereby avoiding transfer problems, both during loading and unloading of a ship.

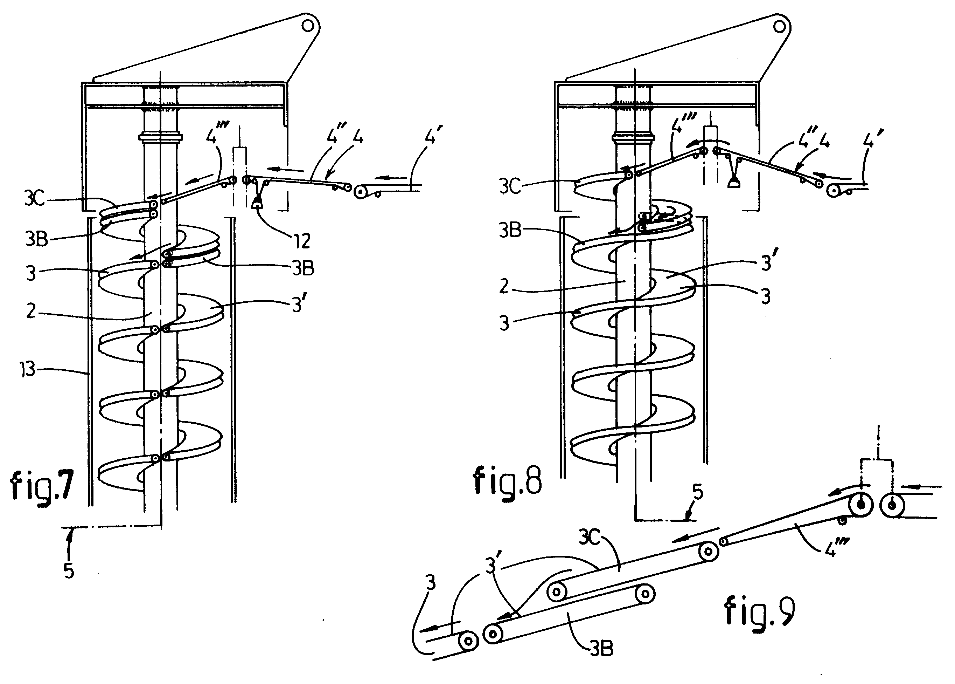

Fig. 7-12 show a second embodiment of the conveying apparatus according to the invention, in which the rotation of the central shaft 2 is always absorbed within the helical belt conveyor 1, and between the belt conveyor 1 and the upper feed and discharge conveyor 4 there is always maintained an abutting connection.

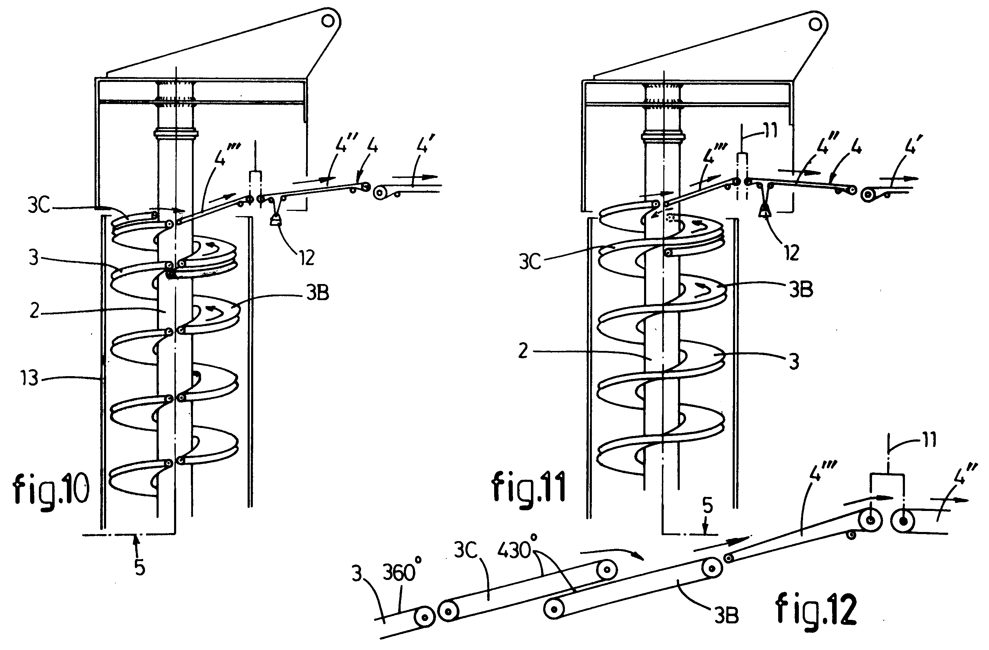

In this embodiment the belt conveyor 1 comprises an upper set of adjustable conveyor belts 3B and 3C. These conveyor belts 3B and 3C are slidable one along the other in order to absorb the rotation of the central shaft 2. For this purpose there is provided on the central shaft 2 or possibly along an exterior protective frame 13 a pair of helical guides positioned on different levels, in the situation of fig. 7-9 the upper helical guide being used for the conveyor belt 3C, while in the unloading position of the conveying apparatus according to fig. 10-12 the conveyor belt 3B is displaced to the lower helical guide.

Fig. 7-9 show that in the loading position of the conveying apparatus the conveyor belt 3B abuts to the subsequent conveyor belt 3, while the conveyor belt 3C connects to the end conveyor 4''' of the upper feed and discharge conveyor 4 in an abutting fashion. The transfer of the goods then takes place downwardly from the conveyor belt 3C to the conveyor belt 3B according to the arrows as shown. A rotation of the central shaft 2 for pivoting the lower discharge and feed conveyor 5 causes an equally large rotation of the conveyor belt 3B which in this case is fixed to the central shaft 2. As a result thereof this conveyor belt 3B slides below the conveyor belt 3c which for this purpose moves upwardly or downwardly along the respective helical guide of the central shaft 2 or the protective frame 13, together with the end conveyor 4''', as is shown by a comparison of fig. 7 and 8, in which the lower discharge and feed conveyor 5 is rotated 180°.

In the unloading situation of fig. 10-12, the conveyor belts 3B and 3C are displaced downwardly along the central shaft 2 as a unit, in this case the conveyor belt 3C being fixed to the central shaft 2 and consequently rotates with it, while the conveyor belt 3B joins to the end conveyor 4''' in an abutting manner and consequently moves upwardly and downwardly along the central shaft 2 upon a rotation of this central shaft 2 by means of a helical guide. Also in this case the transfer of the goods from the conveyor belt 3C to the conveyor belt 3B takes place in downward direction, but now from the upper end of the conveyor belt 3C. As a result also in this case a proper transfer of the goods is ensured without the risk of obstructions.

From the foregoing it will be clear that the invention provides a conveying apparatus of which on the one hand the lower discharge and feed conveyor is rotatable in a horizontal plane, while on the other hand the helical belt conveyor remains connected to the upper feed and discharge conveyor with a proper transition, both in loading and unloading situations.

As a consequence all kinds of goods, such as piece goods and palletized goods may be conveyed in a smooth manner by the conveying apparatus according to the invention.

The invention is not restricted to the embodiments shown in the drawing and described hereinbefore, which may be varied in different manners within the scope of the invention.

**Claims**

1. Conveying apparatus, in particular for loading and unloading ships, comprising a helical belt conveyor (1) for the transport along a helical path, said helical belt conveyor (1) having a substantially vertical central shaft (2) and being provided with a plurality of endless conveyor belts (3), of which an upper run (3') follows a helical path, the apparatus further comprising a lower discharge or feed conveyor (5) being rotatable through at least 360° about said shaft (2), and an upper feed or discharge conveyor (4) having an end conveyor (4''') movable relative to the main portion (4') thereof and the free end of which continuously joining the helical belt conveyor (1), **characterized in that** at least three conveyor belts (3, 3A, 4'''; 3, 3B, 3C, 4''') of the belt conveyor (1) are adjustable and connectable to each other such that, in a loading position of the conveying apparatus, a central conveyor belt (3A; 3B) connects with its lower end abutted to a lower conveyor belt (3) and the central conveyor belt (3A; 3B) being slidable at its upper side below a conveyor belt (4''', 3C) lying thereabove upon rotation about the central shaft (2), and, in an unloading position of the conveying apparatus, the central conveyor belt (3A; 3B) connecting at its upper end to a conveyor belt (4''') lying thereabove, and there being slidable from below over the central conveyor belt (3A; 3B) a downwardly following conveyor belt (3; 3C) upon rotation about the central shaft (2).

2. Conveying apparatus according to claim 1, wherein, in the loading position, the upper conveyor belt (3A) of the helical belt conveyor (1) moves along with the central shaft (2), while the free end of the upper feed or discharge conveyor (4) is slidable along the upper run (3') of the upper conveyor belt (3A) when it is rotating about the central shaft (2), and in the unloading position, the upper conveyor belt (3A) connects with its upper end to the upper feed or discharge conveyor (4) (fig. 1-6).

3. Conveying apparatus according to claim 1, wherein a set of conveyor belts (3B, 3C) is provided one on top of the other and being alternately slidable with respect to each other, wherein always the upper conveyor belt as seen in the respective direction of conveyance, connects to a preceding conveyor belt (3, 4'''), while a conveyor belt (3B) lying under it always follows subsequently (fig. 7-12).

4. Conveying apparatus according to claim 3, wherein the set of conveyor belts (3B, 3C) is adjusted in vertical direction when the conveying apparatus is switched between the loading and unloading position.

fig.1

fig.2

fig.3

fig.5

fig.4

fig.6

fig.7

fig.8

fig.9

fig.10

fig.11

fig.12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 075 645 (INTERPLAN) | 1,2 | B65G67/60 |
| D,A | * page 6, line 8 - line 25; figure 6 * | 3,4 | B65G21/10 |
| | --- | | |
| Y | WO-A-9 001 453 (ORENSTEIN & KOPPEL) | 1,2 | |
| A | * page 4, line 24 - page 5, line 7; figure * | 3,4 | |
| | --- | | |
| D,Y | EP-A-0 125 715 (WEIMAR N.V.) | 1 | |
| D,A | * column 3, line 39 - column 4, line 19; figures 1,2 * | 2 | |
| | ----- | | |

**TECHNICAL FIELDS SEARCHED (Int. Cl.5)**

B65G
B63B

The present search report has been drawn up for all claims

| Place of search | Date of completion of the search | Examiner |
|---|---|---|
| THE HAGUE | 06 APRIL 1992 | NEVILLE D.J. |

EPO FORM 1503 03.82 (P0403)